**Europäisches Patentamt**

**European Patent Office**

**Office européen des brevets**

(11) Publication number: **0 098 168**
**B1**

# EUROPEAN PATENT SPECIFICATION

(45) Date of publication of patent specification: **07.09.88**

(51) Int. Cl.⁴: **G 06 F 12/10**

(21) Application number: **83303785.6**

(22) Date of filing: **30.06.83**

(54) Address translation buffer control system.

(30) Priority: **30.06.82 JP 113310/82**

(43) Date of publication of application:
**11.01.84 Bulletin 84/02**

(45) Publication of the grant of the patent:
**07.09.88 Bulletin 88/36**

(84) Designated Contracting States:
**DE FR GB**

(56) References cited:
**EP-A-0 010 625**

**IBM TECHNICAL DISCLOSURE BULLETIN, vol. 24, no. 2, July 1981, pages 1266-1267, New York, US; E.G. DRIMAK et al.: "Directory look-aside table controls"**

**IBM TECHNICAL DISCLOSURE BULLETIN, vol. 18, no. 10, March 1981, pages 3373-3375, New York, US; A.T. HEALD: "Address translation bypass"**

(73) Proprietor: **FUJITSU LIMITED**
**1015, Kamikodanaka Nakahara-ku Kawasaki-shi Kanagawa 211 (JP)**

(72) Inventor: **Tone, Hirosada c/o Fujitsu Limited Patent Department 1015 Kamikodanaka Nakahara-ku Kawasaki (JP)**

(74) Representative: **Sunderland, James Harry et al HASELTINE LAKE & CO Hazlitt House 28 Southampton Buildings Chancery Lane London WC2A 1AT (GB)**

Courier Press, Leamington Spa, England.

## Description

This invention relates to an address translation control system. Briefly, this invention provides an address translation control method, in a data processing system providing the function to perform storage protection check by storing a storage protection key on the address translation buffer such as a Table Lookaside Buffer (TLB), which executes control in such a way that if the storage protection check is not required, a translation pair of translation result is not registered to the address translation buffer when the desired translation pair does not exist on said address translation buffer and the address translation system is utilized.

In an existing data processing system employing a multi-virtual storage system, an address translation system for translating an effective address into a physical address is comprised. Moreover, also provided is the structure that an address translation buffer TLB which stores results once translated in the form of a translation pair is used and contents of pertinent buffer is utilized for further address translation.

Such TLB is always used for each execution of memory access instructions. It is used ont only when an effective address is a logical address and it is required to translate a pertinent logical address into a physical address but also when an effective address is a real address, because the TLB is also utilized for translating a real address into a physical address. Such TLB also employs the structure that a storage protection key for protecting storage is stored precedingly on said address translation buffer and the storage protection check is caried out simultaneously with said address translation utilizing a fact that said address translation buffer is indexed at the time of memory access. Namely, even in case an effective address is a real address, a translation pair is stored on the address translation buffer together with the storage protection key and the address translation buffer is indexed at the time of access by a real address and a check by storage protection key is carried out. Here, a real address is different from a physical address. A physical address is uniquely assigned to the MSU hardware. A real address is a virtual physical address for each computer on the occasion that plural computers or plural virtual computers use MSU in common. However, some memory access intructions are not required to perform memory protection check. In the case of above instruction, an effective address generally means a real address. In such a case, when an address translation buffer is not hit, entry of translation result to the address translation buffer may be an unefficient update because of the address translation buffer is replaced by an effective address which does not require the storage protection check.

IBM Technical Diclosure Bulletin, Vol. 18, No. 10, March 1976, pages 3373 to 3375, "Address Translation Bypass", discloses a system having a "virtual=real" area of storage (the lowest address part of the storage), in which virtual addresses are equal to real addresses. In relation to this area of storage, address translation is bypassed. No use is made of an address translation buffer, or of page and segment tables. Whether or not an address to be accessed relates to this area of storage is determined by comparing addresses to be accessed with the highest address of the "virtual=real" storage area, which highest address is stored in a register.

According to the present invention, there is provided an address translation control method in a data processing system wherein an address translation system which translates an effective address into a physical address and an address translation buffer which stores translation pairs of the pertinent translated results are provided, a storage protection key is stored on said address translation buffer, and thereby provided are storage protection check mode where a storage protection check must be performed on the basis of said protection key by indexing said address translation buffer and non-check mode where the storage protection check based on said protection key is not required, characterized in that:

in above storage protection check mode, control is performed in such a manner that when address translation is carried out by said address translation system, the pertinent translation result is stored on said address translation buffer, and

in above no-check mode, when the address translation is carried out by said address translation system, the pertinent translation result is directly used without being stored on said address translation buffer.

Fig. 1 is an outline of block diagram of a data processing system to which this invention is applied.

Fig. 2 is a block diagram indicating an address translation control system of the prior art.

Fig. 3 is a block diagram of an address translation control system of an embodiment of this invention.

Fig. 4 is a block diagram of an embodiment of the dynamic addres translation (DAT) system in Fig. 3.

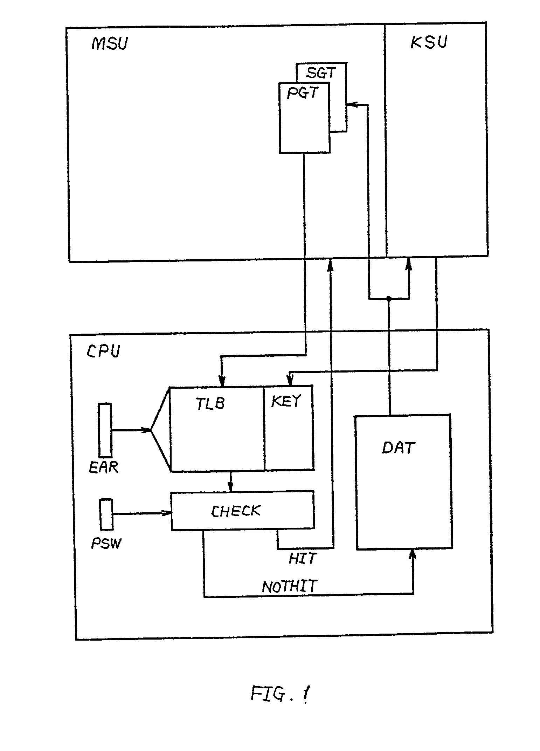

Fig. 1 is an outline of data processing system on which this invention is based. A central processing unit CPU provides an address translation buffer TLB. An address of effective address register EAR is translated into a physical address by TLB and the protection key KEY check is performed.

The check circuit CHECK checks whether a translation pai corresponding to an address in EAR is registered or not, and whether the protection key correponding to said translation pair matches the key (this is included in the program state word register PSW) of the program which has issued said effective address or not. When pertinent translation pair are registered and the key is also matched, it is called a HIT state. Whe TLB is in the HIT state, the main storage MSU is accessed using its output, a certain physical address. If TLB is not the HIT state, a dynamic address translation (DAT) system is started, a corresponding physical address is obtained by indexing the segment table (SGT) and page table (PGT) in the main storage unit (MSU) and its translation pair is registered to TLB. Simultaneously, the storage protection key corresponding to said physical address is obtained from the key storage unit KSU and it is also registered to the KEY part of TLB. Thereafter, MSU is accessed using a physical address obtained by indexing again TLB.

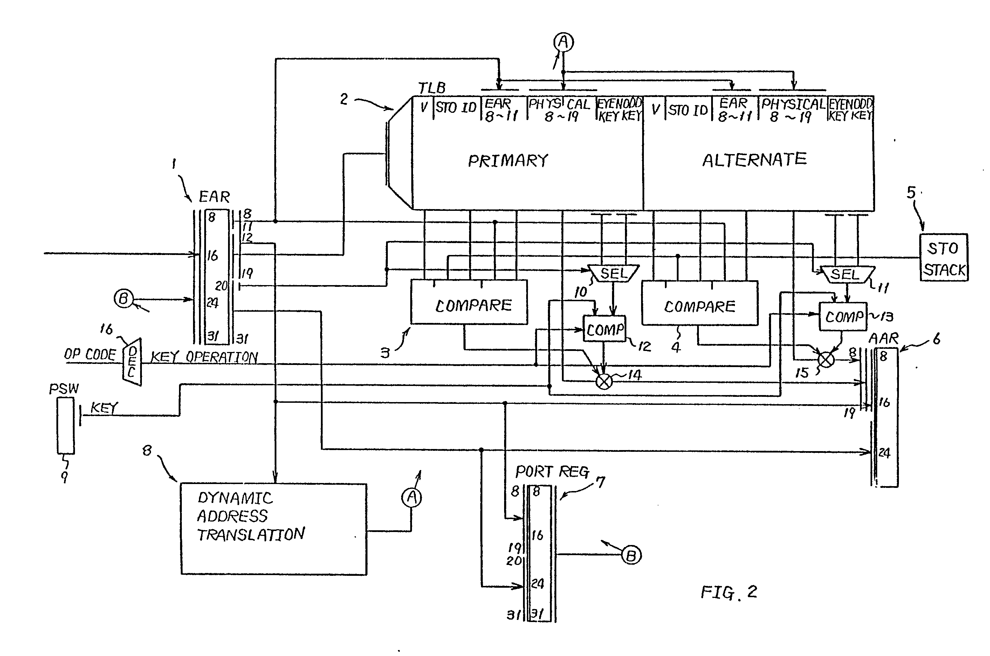

The storage protection key in KSU is provided for each address region of specified size of MSU, for example for each 2K bytes. The address translation is carried out for the addresses of, for example, 4K bytes. Fig. 2 is a block diagram of existing TLB. In Fig. 2, 1 is an effective address register to which an effective address is set, 2 is an address translation buffer consisting of two blocks of PRIMARY and ALTERNATE in order to improve application efficiency in the case shown in the figure, 3 and 4 are comparators, 5 is an STO stock, 6 is a translation result address register, 7 is a port register, 8 is a DAT system. In addition, 9 is a PSW register to which a program state word is stored, 10 and 11 are selectors, 12 and 13 are key comparators 14 and 15 are gate means, 16 is an instruction decoder, respectively.

As an entry of each block, the address translation buffer 2 is given, (i) valid bit V, (ii) segment table origin (STO) ID for controlling multi-virtual storage, (iii) bit "8" to bit "11" of effective address, (iv) bit "8" to bit "19" of the physical address corresponding to pertinent effective address, (v) two EVEN and ODD storage protection key provided for protecting storage corresponding in unit of 2K bytes.

As is well known, when the effective address is set to the register 1 in order to execute processings, the address translation buffer 2 is indexed by 8 bits from the bit "12' to "19" of the effective address. At this time, the effective address "8" to "11" in the contents read out of the address translation buffer 2 are compared respectively with the bit "8" to "11" in the comparators 3 and 4. At this time, validity of content read by the above mentioned valod bit V is confirmed in the comparators 3 and 4, and the STO ID in the content read out above is collated with the content of STO stack (not shown).

In case above valid bit V indicates validity, the effective addresses "8" to "11" match in above comparison and STO ID is collated, for example, in the comparator 3, the physical addresses "8" to "19" read from the primary side of address translation buffer 2 are set to the translation result address register 6. On the other hand, the bits "20" to "31" on the effective address register 1 are directly transferred to the translation result register 6. Thereby, the physical addresses "8" to "31" are set as the translation result on the translation result register 6 and it can be used for memory access. At this time, total content of effective address register 1 is saved to the port register 7 in view of the use for re-access when there is no desired translation pairs on the address translation buffer 2.

If there is no address translation address in the HIT state as a result of index to said address translation buffer 2, the address translation system 8 is started in accordance with the content of effective address register 1. As is proposed in the prior art, the physical addresses corresponding to effective addresses can be extracted through complicated processings and a result is stored in the address translation buffer 2 (through the path A). The stored content is read when content of port register 7 which has been saved as explained above is set to the effective address register 1 (through the path B) and thereby content of address translation buffer 2 is indexed again, and the desired physical addresses can be set to the register 6.

Above operations are already known in the data processing system employing virtual storage system. Even in case the effective address is given as the real address, the address translation buffer 2 is indexed for the translation of real address into physical address and storage protection check by said storage protection key.

There is an instruction for making access to the key of KSU as a kind of memory access instructions. This instruction is generally a privileged instruction wwhich does not require any key check and an effective address is given as a real address. But the TLB index is also necessary for translation into a physical address from a real address.

Such existing operations of such key instructions will be described in Fig. 2. Whether current instruction is key instruction or not can be judged by decoding the operation code in the instruction register 16 by a decoder 17. When it is a key instruction, the key comparators 12 and 13 are forcibly set to the matching state, and only the comparatore 3 and 4 are operated. When addresses are in the HIT state of the TLB, there is no problem to be considered. If it is not in the HIT state, as in the case of the ordinary memory access instructions, a physical address is obtained by the DAT system, a result is registered to TLB and a physical address obtained by repeated index to TLB has been used. In regard to the keys, there is no need of registering the keys, but a key is obtained by making an access to KSU in order to make common the operation with ordinary instructions and then it has been registered to TLB. Usually, such value has a particular value, for example, all zero.

In general, TLB is provided on the basis of such a rule of experience that the adjacent addresses on the logical address are often accessed continuously, and it is very effective when the same address translation pair is used for many times. However, a key instruction has small appearing frequency. If a key instruction is executed executed continuously, but the address to be accessed skips in unit of address translation, namely in unit of 2K bytes near to 4K bytes. Therefore, the same address translation pair is hardly use continuously. Moreover, key check is also not required as described above. If the address translation pair used in this key instruction is newly registered to TLB, one translation pair which has been used must certainly be nullified. Accordingly, the translation pairs having a high possibility of use is eliminated and other translation pairs having less possibility of use are registered, resulting in deterioration of application efficiency of TLB.

This invention eliminates such disadvantage of the prior arts and registration to TLB of the address translation pairs for the key instruction is omitted.

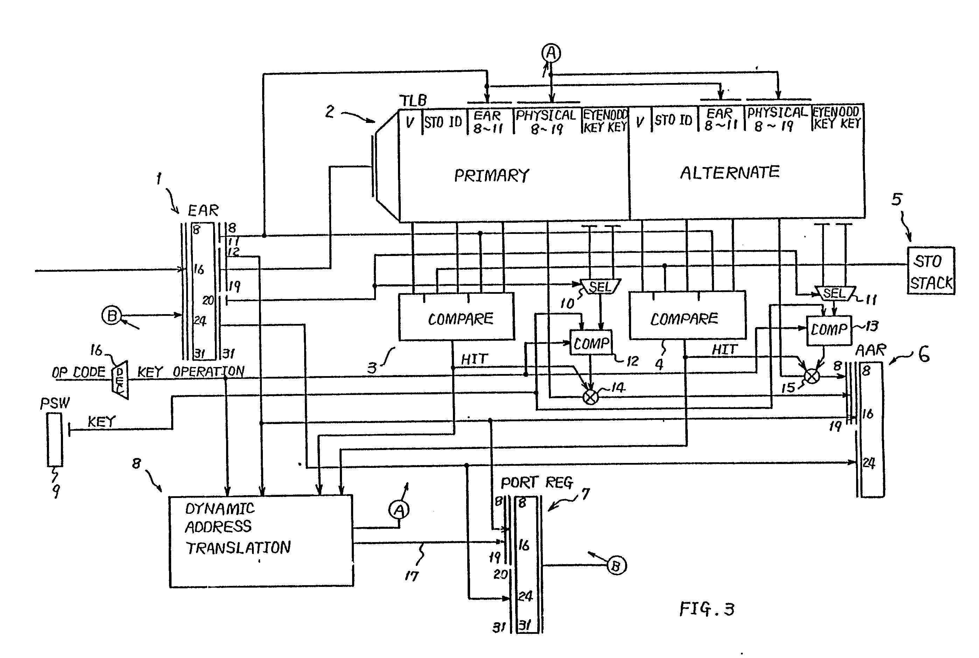

Fig. 3 is an embodiment of this invention. In this figure, reference numbers 1 to 16 correspond to Fig. 2. The structure shown in Fig. 3 is different from that shown in Fig. 2 in such a point that a path for setting an output of the address translation system 8 to the port register 7 is provided as shown at 17.

In case it is required to execute an ordinary operation, namely an storage protection check based on the storage protection key by indexing the address translation buffer 2, the operations are exactly the same as that described by referring to Fig. 2. Therefore, these are not described here. In the case of key instruction in this invention, processings are executed as described below.

As in the case of the ordinary instruction, first, an effective address is set to an effective address register 1, the address translation buffer 2 is indexed, a physical address is set to the translation result address register 6 in case the desired translation pair exits, namely there is a HIT address. In this case, however, result of check by the storage protection key is neglected as described above.

If there is no HIT address, the address translation system 8 is started, and a desired physical address can be extracted. These operation profiles are also the same as that in the above storage protection check mode. However, in the processing profile while addresses are not in the HIT state, when a physical address is extracted from the address translation system 8, the result is overridden to the bits "8" to "19" in the contents of port register 7. Namely, such physical address is not stored in the address translation buffer 2, different from said storage protection check mode. Said translation result is once set to the effective address register 1 from the port register 7 and then transferred to the translation result register 6.

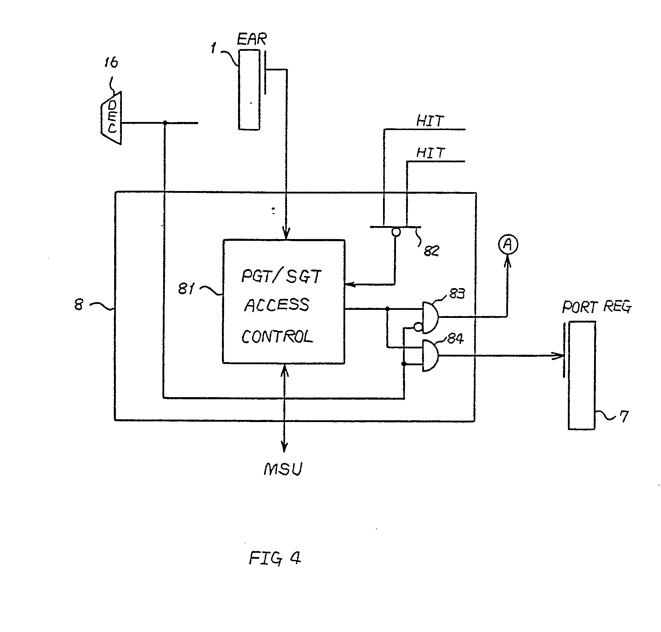

Fig. 4 is an embodiment of the DAT system in Fig. 3. If the HIT signal is not output from any comparators 3, 4, the access means 8 of the page table and segment table is started by the NOR gate 82 and thereby DAT is carried out. In case the signal sent from the decoder 16 indicates an instruction other than the key instruction, the physical address obtained as a result of DAT is transmitted to the path A through the AND gate 83. In the case of key instruction, a physical address is sent to the PORT register 7 through the AND gate 84.

As described above, this invention provides a very efficient address translation system wherein it is prevented that content of address translation buffer is replaced undesirably, on account of the translation pair generated at the time of memory access by the effective address which does not require any storage protection check.

## Claim

1. An address translation control method in a data processing system wherein an address translation system which translates an effective address into a physical adress and an address· translation buffer (TLB) which stores translation pairs of the pertinent translated results are provided, a storage protection key is stored on said address translation buffer, and thereby provided are storage- protection check mode where a storage protection check must be performed on the basis of said protection key by indexing said address translation buffer and non-check mode where the storage protection check based on said protection key is not required, characterized in that;

in above storage protection check mode, control is performed in such a manner that when address translation is carried out by said address translation system, the pertinent translation result is stored on said address translation buffer, and

in above no-check mode, when the address translation is carried out by said address translation system, the pertinent translation result is directly used without being stored on said address translation buffer.

## Patentanspruch

1. Adreßübersetzungssteuerverfahren in einem Datenverarbeitungssystem, bei dem ein Adreßübersetzungssystem, das eine effektive Adresse in eine Physikalische Adresse übersetzt, und ein Adreßübersetzungspuffer (TLB), der Übersetzungspaare von zugehörigen übersetzten Ergebnissen speichert, vorgesehen sind, und ein Speicherschutzschlüssel in dem genannten Adreßübersetzungspuffer gespeichert wird dadurch ein Speicherschutzprüfmodus vorgesehen wird, bei dem eine Speicherschutzprüfung auf der Basis des genannten Schutzschlüssels durch Indizieren des genannten Adreßübersetzungspuffers durchgeführt werden muß, und ein Nichtprüfungsmodus, bei dem die auf dem genannten Schutzschlüssel basierende Speicherschutzprüfung nicht erforderlich ist, dadurch gekennzeichnet, daß;

bei dem obigen Speicherschutzprüfmodus die Steuerung auf solch eine Weise durchgeführt wird, daß dann, wenn die Adreßübersetzung durch das genannte Adreßübersetzungssystem durchgeführt wird, das zugehörige Übersetzungsergebnis in dem genannten Adreßübersetzungspuffer gespeichert wird, und

bei dem obigen Nichtprüfmodus, wenn die Adreßübersetzung durch das genannte Adreßübersetzungssystem durchgeführt wird, das zugehörige Übersetzungsergebnis direkt verwendet wird, ohne in dem genannten Adreßübersetzungspuffer gespeichert zu werden.

**Revendication**

1. Procédé de commande de traduction d'adresse dans un système de traitement de données où sont prévus un système de traduction d'adresse qui traduit une adresse effective en une adresse physique et un tampon de traduction d'adresse (TLB) qui mémorise les paires de traductions des résultats traduits pertinents, un clé de protection de mémoire étant mémorisée dans le tampon de traduction d'adresse, et par lesquels sont fournis un mode de contrôle de protection de mémoire dans lequel un contrôle de protection mémoire doit être exécuté en fonction d'adresse et un mode d'absence de contrôle dans lequel le contrôle de protection de mémoire en fonction de la clé de protection n'est pas nécessaire, caractérisé en ce que:

dans le mode de contrôle de protection de mémoire ci-dessus, une commande est effectuée de telle manière que, lorsqu'une traduction d'adresse est réalisée par le système de traduction d'adresse, le résultat de traduction pertinent est mémorisé dans le tampon de traduction d'adresse, et

dans le mode d'absence de contrôle ci-dessus, lorsque la traduction d'adresse est réalisée par le système de traduction d'adresse, le résultat de traduction pertinent est directement utilisé sans être mémorisé dans le tampon de traduction d'adresse.

FIG. 1

1

FIG. 2

FIG.3

0 098 168

FIG 4